# EUROPEAN PATENT SPECIFICATION

(11) **EP 4 042 002 B1**
(45) Date of publication and mention of the grant of the patent: **26.03.2025**
(21) Application number: 20873238.8
(22) Date of filing: 24.08.2020
(51) Int. Cl.: G05D 23/02, F01P 7/16, G05D 23/13

(54) **A THERMOSTAT ASSEMBLY PROVIDING CONSTANT OUTLET TEMPERATURE BY ADJUSTING MIXING RATIO AUTONOMOUSLY**
THERMOSTATANORDNUNG MIT BEREITSTELLUNG EINER KONSTANTEN AUSGANGSTEMPERATUR DURCH AUTONOME EINSTELLUNG DES MISCHUNGSVERHÄLTNISSES
ENSEMBLE THERMOSTAT FOURNISSANT UNE TEMPÉRATURE DE SORTIE CONSTANTE PAR AJUSTEMENT DU RAPPORT DE MÉLANGE DE MANIÈRE AUTONOME

(30) Priority: 30.09.2019 TR 201914833
(43) Date of publication of application: 17.08.2022
(73) Proprietor: KIRPART OTOMOTIV PARÇALARI SANAYI VE TICARET A.S., 16800 Bursa (TR)
(72) Inventor: UNLUASLAN, Faruk, 16140 Bursa (TR); KANBUR, Hikmet, 16800 Bursa (TR)
(74) Representative: Demirkiran, Hasan
(86) International application number: PCT/TR2020/050741
(87) International publication number: WO 2021/066770

(56) References cited:
- EP-A1- 1 672 257
- WO-A1-00/14615
- WO-A1-2019/066758
- WO-A2-2019/245508
- GB-A- 2 329 691
- GB-A- 2 329 691
- US-A- 6 079 625

## Description

### Technical Field

The invention relates a thermostat assembly which exhibits constant outlet temperature by adjusting mixing ratio between cold and warm fluid autonomously.

Especially, the present invention relates a thermostat assembly regulating outlet temperature according to the determined constant temperature value, in the engine cooling system.

### Prior Art

In combustion engines, coolant temperature control is a crucial issue for maintaining vehicle performance. Engine cooling systems provide indirectly temperature control of the engine and engine parts within vehicle. Thermostat assembly within the engine cooling system decides whether the coolant coming from engine channels is cooled, generally according to the temperature of inlet or outlet.

In sanitary usage, there are thermostat assemblies regulating outlet temperature according to the determined constant temperature values. However, in engine cooling systems there is not any thermostat assembly exhibiting constant outlet temperature by adjusting mixing ratio between cold and warm fluid autonomously. Since the valve structure of the conventional thermostat assembly has sleeve seat portion which is positioned at higher level than inlets (bypass inlet, radiator inlet), the coolants coming from bypass inlet and radiator inlet flow directly to the outlet by contacting locally with the heat sensitive reservoir portion. So, in the conventional thermostat construction, the heat sensitive reservoir portion senses local temperatures (cold coolant, warm coolant, residual coolant) together, instead of just the mixed coolant. Since the sensitive portion do not sense the temperature of the mixed coolant, coolant temperature control is not provided properly. This causes the efficiency of cooling system and consequently the efficiency of the vehicle having this cooling system to decrease.

The document TR2019/00314 mentions also a thermostat assembly which exhibits valve control according to thermostat outlet temperature by allowing coolants coming from bypass inlet and radiator inlet to be mixed until they reach to the heat sensitive reservoir portion of thermo-actuator. Here, both coolant coming from bypass inlet and coolant coming from radiator inlet firstly pass through mixing chamber and mix well each other. Then, the mixed coolant flows towards engine inlet by exiting from outlet portion. This means that the temperature of thermostat outlet is equal to the temperature of the mixed coolant. Since the heat sensitive reservoir portion of the thermo-actuator locates within the mixing chamber, thermostat outlet temperature is determined according to threshold value of the thermo-actuator chosen by manufacturer. However, this solution is applicable for the thermostat construction which has inlets located in same direction at different levels in one side of thermostat frame and outlet located at higher level in opposite side of thermostat frame. It is not applicable for the thermostat construction having inlets in opposite directions at nearly same level and outlet located as vertical to them at below.

The document US6079625A mentions a thermostatic mixing valve which receives fluid from a first source and fluid from a second source and outputs a mixture of the fluids. However, here, it is not mentioned about a thermostat assembly providing autonomous valve motion for mixing warm and cold coolant according to determined outlet temperature.

The document US20040000594A1 mentions a thermostatic mixing valve for hot and cold water, which has two-stage inlet chambers for the hot and cold water flows respectively. However, here, it is not mentioned about a thermostat assembly providing autonomous valve motion for mixing warm and cold coolant according to determined outlet temperature.

The document GB 2 329 691 A discloses a thermostatic mixing valve with a thermostatic actuator moving the closure member in response to changes in the water temperature to maintain the outlet water at a predetermined temperature. However, the determination of the outlet temperature can be subject to variations.

As a result, there is a require for a thermostat assembly exhibiting constant outlet temperature by adjusting mixing ratio between cold and warm fluid autonomously.

### Objectives and Short Description of the Invention

The aim of the present invention is to present a thermostat assembly which exhibits constant outlet temperature by adjusting mixing ratio between cold and warm fluid autonomously.

The aim of the present invention is to allow regulation of outlet temperature for determined constant temperature values, in the engine cooling system.

The invention is defined by the appended claim.

### Description of the Figures

In Figure 1, a perspective view of the present valve structure is given.
In Figure 2, an exploded perspective view of the present thermostat assembly is given.
In Figure 3, a cross-sectional view of mentioned thermostat assembly is given.

### Reference Numerals

- 1.: Thermostat assembly
- 10.: Frame
- 11.: Bypass inlet
- 12.: Radiator inlet
- 13.: Outlet
- 15.: Thermostat interior space
- 16.: Spring nest
- 20.: Thermo-actuator
- 21.: Heat sensitive reservoir
- 22.: Piston
- 23.: Sleeve
- 30.: Valve structure
- 31.: Sleeve seat
- 32.: Valve-bypass inlet
- 33.: Valve-radiator inlet
- 34.: Mixing chamber
- 35.: Spring seat
- 40.: Spring
- 50.: Cover
- 51.: Piston seat
- C.: Cold coolant
- W.: Warm coolant
- M.: Mixed coolant

### Detailed Description

This disclosure relates to a thermostat assembly (1) which exhibits constant outlet (13) temperature by adjusting mixing ratio between cold coolant (C) and warm coolant (W) autonomously. This is possible thanks to lower position of the thermo-actuator (20) within valve structure (30). Lower positioning of thermo-actuator (20) provides that heat sensitive reservoir (21) portion of the thermo-actuator (20) senses the temperature of the mixed coolant (M). Thus, it allows autonomous adjustment of the mixing ratio between cold coolant (C) and warm coolant (W) as providing constant thermostat outlet (13) temperature. The value of the outlet (13) temperature is determined according to threshold value of the thermo-actuator (20) chosen by its manufacturer.

Conventional thermostat assembly provides temperature control within engine cooling system by adjusting coolant flow ratio between bypass circuitry and heat exchange circuitry according to the temperature value of coolant incoming from engine outlet. Coolant flow ratio is determined by heat sensitive reservoir portion of thermo-actuator located within thermostat assembly. Heat sensitive reservoir allows the temperature of the engine outlet coolant to be sensed via heat transmission occurred between wax compound within reservoir and coolant incoming from engine outlet through its reservoir wall. The increase in the wax temperature causes the increase in the wax volume, or vice versa, the decrease in the wax temperature causes the reduce in the wax volume. The volume change in the wax compound allows forward and backward motion of piston, consequently forward and backward motion of the valve structure guided by mentioned thermo-actuator. Thus, coolant flow control between bypass circuitry and heat exchange circuitry is provided according to the valve position determined by the temperature of the coolant incoming from engine outlet. However, in this case, it is not possible to manage the temperature values of motor inlet coolant, as desired by manufacturer. Since the temperatures of thermostat outlet coolant and engine inlet coolant are same in two inlets-one outlet thermostat structures, here it is critically important to keep thermostat outlet temperature at a constant temperature value.

The present disclosure relates to a thermostat assembly (1) which regulates outlet temperature for determined constant temperature values, in the engine cooling system.

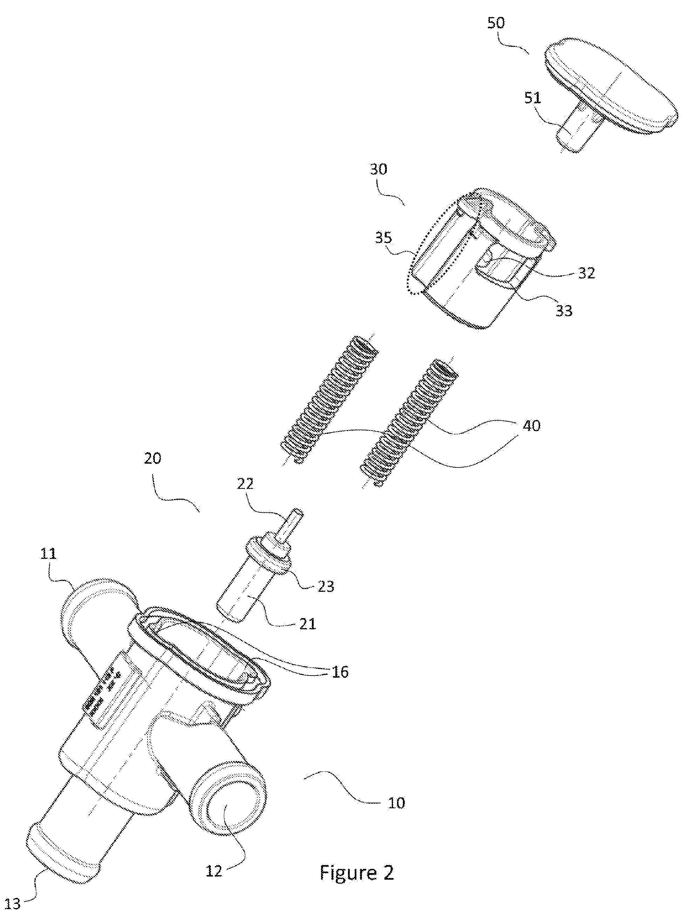

As seen from Figure 2, the present thermostat assembly (1) comprises a frame (10) including bypass inlet (11), radiator inlet (12), outlet (13) portions, a thermo-actuator (20) including heat sensitive reservoir (21), piston (22) and sleeve (23) portions, a tube type valve structure (30) including a sleeve seat (31), valve-bypass inlet (32), valve-radiator inlet (33), spring seats (35) and mixing chamber (34) portions, two springs (40), a cover (50) including piston seat (51) portion.

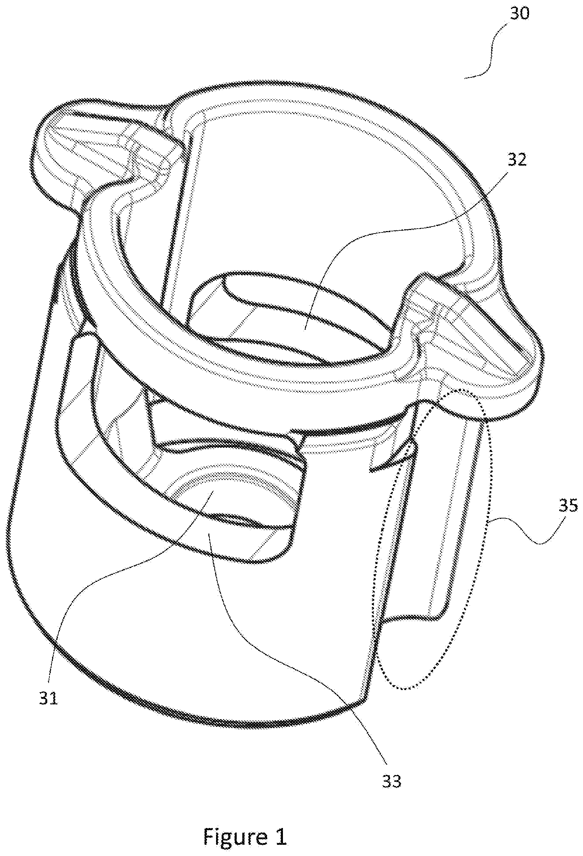

A perspective view of the present valve structure (30) is given in Figure 1. As seen from this figure, sleeve seat (31) portion is located at lower level from the inlets. In conventional valve structure, sleeve seat is located at highest position within the valve structure. As a result of this lower positioning of the sleeve seat (31) in the present valve structure (30), the heat sensitive reservoir (21) portion of the thermo-actuator (20) locates at lower position according to conventional construction. Thanks to this difference from the conventional construction, the present valve structure (30) forms a mixing chamber (34) within the valve structure's (30) interior space where both the coolant coming from valve-bypass inlet (32) and the coolant coming from valve-radiator inlet (33) mix well to each other before reaching the heat sensitive reservoir (21) portion. Thus, unlike the conventional thermostat assemblies, here, the heat sensitive reservoir (21) portion senses just the temperature value of mixed coolant (M) instead of local temperatures (the temperatures of coolants coming from bypass inlet, radiator inlet, residual).

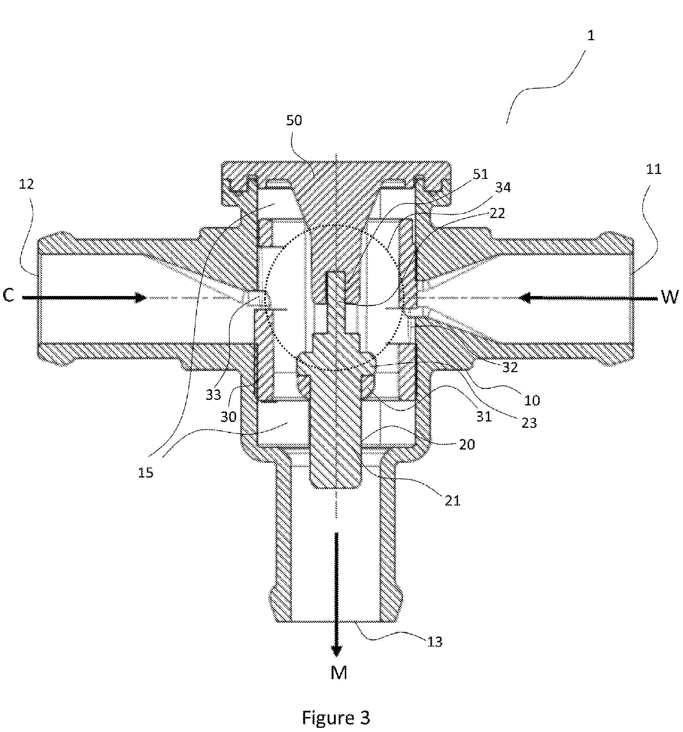

A cross-sectional view of the present thermostat assembly (1) in the partially open thermostat position is given in Figure 3. As seen from this figure, cold coolant (C) coming from radiator inlet (12) and warm coolant (W) coming from bypass inlet (11) mix to each other within the mixing chamber (34) before they contact to the heat sensitive reservoir (21) portion of the thermo-actuator (20). As a result of mixing of the cold coolant (C) and warm coolant (W), mixed coolant (M) is formed. Then, the mixed coolant (M) contacts with the heat sensitive reservoir (21) portion while flowing towards the outlet (13) channel. Thus, the heat sensitive reservoir (21) portion senses just the temperature of the mixed coolant (M). Since the heat sensitive reservoir (21) portion locates mostly within the outlet (13) flow line thanks to its lower position, it regulates directly the temperature of the outlet (13) coolant by sensing the temperature of the mixed coolant (M). As a result, the valve structure (30) moves forward and backward within thermostat interior space (15) via thermo-actuator (20) for adjusting mixing ratio between cold coolant (C) and warm coolant (W). This valve motion is provided according to the threshold value of the thermo-actuator (20) chosen by manufacturer thanks to the thermo-actuator's (20) autonomous motion keeping the outlet (13) temperature in determined threshold value. Thus, it is possible to keep the outlet (13) temperature in a determined constant temperature value. When the temperature of the mixed coolant (M) is greater than the determined temperature value (threshold temperature value), thermo-actuator (20) allows greater amount of cold coolant (C) to be mixed within the mixed coolant (M) by moving the valve structure (30) to backward. When the temperature of the mixed coolant (M) is lower than the determined temperature value, thermo-actuator (20) allows greater amount of warm coolant (W) to be mixed within the mixed coolant (M) by moving the valve structure (30) to forward.

Shortly, thanks to lower positioning of the heat sensitive reservoir (21) portion according to the inlets, the interior space of the valve structure (30) becomes a mixing chamber (34) where the cold coolant (C) and warm coolant (W) mix well to each other before reaching to the heat sensitive reservoir (21) portion of the thermo-actuator (20). After mixing the cold coolant (C) and warm coolant (W), the mixed coolant (M) flows through the thermo-actuator (21) on the outlet (13) channel.

According to this embodiment of the present invention, there are two spring (40) elements. However, in the other embodiments of this disclosure it is possible to use just one spring (40) element or more than two spring (40) elements. Here, these two spring (40) elements are located reciprocally between spring nest (16) and spring seat (35). In conventional thermostat assemblies, since spring element locates on the flow and generally encloses the heat sensitive reservoir, it prevents the heat sensitive reservoir portion to sense the temperature well and causes pressure drop in coolant by damaging flow. Thanks to outside position of the spring (40) elements in this embodiment, it is possible that the heat sensitive reservoir (21) portion senses the temperature well by keeping full contact with mixed coolant (M). Also, since the flow is not obstructed here, the pressure of the coolant is preserved through the thermostat interior space (15). Besides, two spring (40) elements used here keep the valve structure (30) in balance.

## Claims

1. A thermostat assembly (1) for an engine cooling system, the thermostat assembly comprising a frame (10) including bypass inlet (11), radiator inlet (12) and outlet (13) portions, a thermo-actuator (20) including heat sensitive reservoir (21), piston (22) and sleeve (23) portions, a tube type valve structure (30) including valve-bypass inlet (32) and valve-radiator inlet (33) portions, a cover (50) including piston seat (51) portion, the thermostat assembly being configured to exhibit constant outlet (13) temperature by adjusting mixing ratio between cold coolant (C) and warm coolant (W) autonomously, wherein
- the tube type valve structure (30) further comprises a sleeve seat (31) which forms a mixing chamber (34) within interior space of the valve structure (30) by being located at lower position than said valve-bypass inlet (32) and valve-radiator inlet (33) portions,
- the thermostat assembly (1) further comprises two springs (40) that are located reciprocally between spring nest (16) and spring seat (35) of the valve structure (30) in an outside position, thereby, the heat sensitive reservoir (21) portion senses the temperature well by keeping in full contact with mixed coolant (M), and also the valve structure (30) is kept in balance.

## Patentansprüche

1. Thermostatbaugruppe (1) für ein Motorkühlsystem, wobei die Thermostatbaugruppe (1) einen Körper (10) mit einem Bypass-Einlass (11), einem Kühlereinlass (12) und einem Kühlerauslass (13), einen Thermoaktuator (20) mit einem wärmeempfindlichen Reservoir (21), einem Kolben (22) und einer Hülse (23), eine rohrförmige Ventilstruktur (30) mit einem Ventil-Bypass-Einlass (32) und einem Ventil-Kühlereinlass (33), sowie eine Abdeckung (50) mit einem Kolbensitz (51) umfasst, wobei die Thermostatbaugruppe (1) so ausgestaltet ist, dass sie das Mischverhältnis zwischen kaltem Kühlmittel (C) und warmem Kühlmittel (W) autonom regelt, so dass am Auslass (13) eine stetige Temperatur gewährleistet ist, **wobei**
- die rohrförmige Ventilstruktur (30) ferner einen Hülsensitz (31) umfasst, der gegenüber dem Ventil-Bypass-Einlass (32) und dem Ventil-Kühlereinlass (33) niedergesetzt angeordnet ist, so dass im Innenraum der Ventilstruktur (30) eine Mischkammer (34) bereitgestellt ist, und
- die Thermostatbaugruppe (1) ferner zwei Federn (40) umfasst, die jeweils außenseitig zwischen einer Federaufnahme (16) und einem Federsitz (35) der Ventilstruktur (30) angeordnet sind, so dass der wärmeempfindliche Reservoir (21) zur genauen Temperaturerfassung und zur Balancereglung der Ventilstruktur (30) in vollen Kontakt mit dem gemischten Kühlmittel (M) steht.

## Revendications

1. Un ensemble thermostat (1) pour un système de refroidissement de moteur, l'ensemble thermostat (1) comprenant un cadre (10) comprenant des parties d'entrée de dérivation (11), d'entrée de radiateur (12) et de sortie (13), un thermo-actionneur (20) comprenant un réservoir sensible à la chaleur (21), piston (22) et de manchon (23), une structure de soupape de type tube (30) comprenant entrée de dérivation de soupape (32) et d'entrée de radiateur de soupape (33), un couvercle (50) comprenant part de siège de piston (51), l'ensemble thermostat (1) étant configuré pour présenter une température de sortie (13) constante en ajustant le rapport de mélange entre le liquide de refroidissement froid (C) et le liquide de refroidissement chaud (W) de manière autonome, **dans lequel**
- la structure de soupape de type tube (30) comprend en outre un siège de manchon (31) qui forme une chambre de mélange (34) dans l'espace intérieur de la structure de soupape (30) en étant situé à une position plus basse que lesdites parties d'entrée de dérivation de soupape (32) et d'entrée de radiateur de soupape (33),
- l'ensemble thermostat (1) comprend en outre deux ressorts (40) qui sont situés de manière réciproque entre le nid de ressort (16) et le siège de ressort (35) de la structure de soupape (30) dans une position extérieure, de sorte que la partie réservoir sensible à la chaleur (21) détecte bien la température en restant en contact complet avec le liquide de refroidissement mélangé (M), et également la structure de soupape (30) est maintenue en équilibre.
